(19) Europäisches Patentamt
European Patent Office
Office européen des brevets

(11) **EP 2 435 787 B1**

(12) **EUROPÄISCHE PATENTSCHRIFT**

(45) Veröffentlichungstag und Bekanntmachung des Hinweises auf die Patenterteilung:
**22.03.2017   Patentblatt 2017/12**

(21) Anmeldenummer: **10715163.1**

(22) Anmeldetag: **06.04.2010**

(51) Int Cl.:
*G01C 19/56* *(2012.01)*

(86) Internationale Anmeldenummer:
**PCT/EP2010/054500**

(87) Internationale Veröffentlichungsnummer:
**WO 2010/136246 (02.12.2010 Gazette 2010/48)**

(54) **SENSOR UND VERFAHREN ZUM BETREIBEN EINES SENSORS**

SENSOR AND METHOD FOR OPERATING A SENSOR

CAPTEUR ET PROCÉDÉ POUR FAIRE FONCTIONNER UN CAPTEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.05.2009   DE 102009026508**

(43) Veröffentlichungstag der Anmeldung:
**04.04.2012   Patentblatt 2012/14**

(73) Patentinhaber: **Robert Bosch GmbH**
**70442 Stuttgart (DE)**

(72) Erfinder: **BALSLINK, Thorsten**
**72770 Reutlingen (DE)**

(56) Entgegenhaltungen:
**WO-A1-2005/001382     WO-A1-2009/037499**
**US-A- 5 764 705**

## Beschreibung

Die Erfindung betrifft einen Sensor, insbesondere einen Drehratensensor, gemäß dem Oberbegriff des Patentanspruchs 1, wie aus der US 5 764 705 A bekannt.

Stand der Technik

Mikromechanische Drehratensensoren werden im Automobilbereich z.B. in ESP-Systemen, zur Roll-Over-Sensierung oder zu Navigationszwecken eingesetzt. Die Aufgabe des Drehratensensors ist die korrekte Messung der Autobewegung um eine Drehachse.

Ein herkömmlicher mikromechanischer Drehratensensor umfasst in der Regel einen auf einem Substrat beweglich angeordneten Schwingkörper, welcher gegenüber dem Substrat in eine oszillierende Schwingbewegung bei einer Antriebsfrequenz $f_x$ versetzbar ist. Eine zu der Schwingbewegung nicht-parallele Drehbewegung eines rotierbaren Körpers, an welchem der Drehratensensor befestigt ist, bewirkt eine Corioliskraft auf den Schwingkörper, durch welche der Schwingkörper zusätzlich ausgelenkt wird. Mit Hilfe von Messelektroden kann diese zusätzliche Auslenkung kapazitiv detektiert und hinsichtlich einer die Drehbewegung des rotierbaren Körpers beschreibenden Größe ausgewertet werden. Eine derartige Größe ist beispielsweise eine Drehrate der Drehbewegung des rotierbaren Körpers.

Bei dem oben beschriebenen Messprinzip bewirken auch lineare (d.h. nichtrotatorische) Beschleunigungen oder Vibrationen auf den rotierbaren Körper eine Auslenkung der Messelektroden mit einer Kraft, die parallel zur Corioliskraft wirkt. Um Drehbewegungen von einer solchen linearen Beschleunigung zu unterscheiden, sind verschiedene Maßnahmen bekannt.

Zunächst ist es bekannt, zwei als Linearschwinger ausgelegte Drehraten-Sensorelemente derart zu koppeln, dass ihre Schwingkörper antiparallel zueinander schwingen. Bei einer solchen Anordnung hat eine lineare Beschleunigung oder Vibration (ohne Drehkomponente) auf die Messelektroden wirkende Kräfte mit identischen Kraftvektoren zur Folge, wohingegen bei einer Drehbewegung die Kraftvektoren der auf die Messelektroden wirkenden Corioliskräfte entgegengesetzt zueinander sind. Werden die Ausgangssignale der zwei Sensorelemente voneinander subtrahiert, so heben sich daher die durch lineare Beschleunigung oder Vibration verursachten (gleichphasigen) Signalanteile der beiden Sensorelemente gegeneinander auf, wohingegen die bei einer Drehbewegung durch Corioliskräfte verursachten (gegenphasigen) Signalanteile sich durch die Subtraktion nicht gegeneinander aufheben. Somit kann also der Einfluss von linearen Beschleunigungen oder Vibrationen auf den Sensor kompensiert werden.

Allerdings erfolgt bei einer solchen Anordnung eine komplette Kompensation nur wenn die beiden Sensorelemente perfekt symmetrisch zueinander ausgelegt sind. Aufgrund von Fertigungstoleranzen und dergleichen sind in der Praxis jedoch gewisse Asymmetrien unvermeidbar, so dass bei einer linearen Störung ein Differenzsignal entsteht, welches herkömmlicherweise von Drehratensignalen nicht unterscheidbar ist.

Zwar kann ein ausgangsseitig vorgesehenes Tiefpassfilter dazu dienen, solche durch lineare Störungen verursachte Signalkomponenten herauszufiltern. Allerdings besteht das Problem, dass bei Vibrationen mit einer Frequenz, die annähernd gleich der Antriebsfrequenz $f_x$ des Sensors ist, ein Seitenband entsteht, welches das Tiefpassfilter passieren kann und daher fälschlicherweise als Drehkomponente interpretiert werden kann. Mit anderen Worten, es liegt eine Störbarkeit vor bei Vibrationen in einem Frequenzbereich der Antriebsfrequenz $f_x$ plus/minus der Eckfrequenz des ausgangsseitigen Tiefpassfilters.

Um der Störbarkeit in diesem Frequenzbereich entgegenzuwirken, kann eine Dämpfung der externen Vibrationen in diesem Frequenzbereich vorgesehen werden, z.B. durch eine Aufhängung mit geeigneten Federelementen. Allerdings sind solche Maßnahmen aufwändig und können auch keine vollkommene Kompensierung der Vibrationen erreichen.

Offenbarung der Erfindung

Es ist somit eine Aufgabe der vorliegenden Erfindung, einen Sensor bereitzustellen, der gegenüber externen Störungen, insbesondere gegenüber externen Vibrationen, unempfindlich ist.

Demgemäß wird ein Sensor zum Messen einer Messgröße bereitgestellt, der ein Sensorsignal erzeugt, welches bei einer Antriebsfrequenz oszilliert, wobei der Sensor folgendes aufweist:

- einen Rate-Demodulator, der das Sensorsignal durch Multiplikation mit einem ersten Demodulationssignal demoduliert, um aus dem Sensorsignal ein Rate-Signal zu erzeugen, in welchem eine Information über die zu messende Messgröße enthalten ist;
- einen Quadratur-Demodulator, der das Sensorsignals durch Multiplikation mit einem um 90° zum ersten Demodulationssignal verschobenen zweiten Demodulationssignal demoduliert, um aus dem Sensorsignal ein Quadratur-Signal zu erzeugen; und

- eine Auswerteschaltung, die entscheidet, ob das Quadratur-Signal oder ein daraus abgeleitetes Signal einer periodischen Oszillation unterliegt und bei Vorliegen einer periodischen Oszillation ein Statussignal mit einem Wert ausgibt, der anzeigt, dass das aktuelle Rate-Signal von einer auf den Sensor wirkenden externen Störung beeinflusst ist.

Wenn auf den Sensor eine externe Störung wirkt, insbesondere eine externe Vibration in einem bestimmten Frequenzbereich, dann kann sich das in einer periodische Oszillation des Quadratur-Signals bzw. eines daraus abgeleiteten Rückkopplungssignals niederschlagen. Der erfindungsgemäße Sensor schließt also aus einer solchen periodischen Oszillation auf das Vorliegen einer externen Störung und gibt ein Statussignal aus, welches anzeigt, dass der aktuell ausgegebene Messwert fehlerbehaftet ist. Dieses Statussignal kann nachfolgenden Systemen, wie zum Beispiel einem ESP-System in einem Kraftfahrzeug, in welchem der Sensor vorgesehen ist, zur Verfügung gestellt werden, so dass verhindert werden kann, dass Entscheidungen auf Basis von falschen oder verfälschten Messwerten getroffen werden.

Der Sensor kann ferner einen Quadraturregler aufweisen, der das Quadratur-Signal empfängt und ein Rückkopplungssignal erzeugt, welches im Sensor rückgekoppelt wird, um das Quadratur-Signal auf im Wesentlichen Null zu regeln, wobei die Auswerteschaltung entscheidet, ob dieses Rückkopplungssignal einer periodischen Oszillation unterliegt. In diesem Falle ist es vorteilhaft, wenn dem Quadraturregler ferner das Statussignal zugeführt wird und der Quadraturregler das Rückkopplungssignal bei seinem momentanen Wert festklemmt, wenn das Statussignal auf einen Wert springt, der anzeigt, dass das aktuelle Rate-Signal von einer auf den Sensor wirkenden externen Störung beeinflusst ist. Auf diese Weise kann verhindert werden, dass ein auf einer externen Störung beruhendes Quadratursignal in die Messstrecke des Sensors zurückgekoppelt wird und die Messung beeinflusst.

Vorteilhafterweise weist der Sensor ferner eine Korrekturschaltung auf, der das Statussignal und das Rate-Signal zugeführt werden, und die in dem Fall, dass das Statussignal einen Wert aufweist, der anzeigt, dass das aktuelle Rate-Signal von einer auf den Sensor wirkenden externen Störung beeinflusst ist, das Rate-Signal einer Korrektur unterzieht. Somit kann im Falle einer externen Störung die Auswirkung der Störung auf das Rate-Signal kompensiert werden und ein korrigiertes Rate-Signal kann ausgegeben werden.
Eine solche Korrektur des Rate-Signals kann beispielsweise dadurch realisiert werden, dass der Sensor folgendes aufweist:

einen Phasenschieber, der das Quadratur-Signal um 90° phasenverschiebt und ein um 90° phasenverschobenes Quadratur-Signal ausgibt;
einen Subtrahierer, der die Differenz zwischen dem phasenverschobenen Quadratur-Signal und dem Rate-Signal bildet und als Differenzsignal ausgibt;
einen Multiplexer, der in Abhängigkeit vom Status-Signal entweder das Rate-Signal oder das vom Subtrahierer gebildete Differenzsignal ausgibt.

Der Sensor kann beispielsweise als Drehratensensor ausgebildet sein, welcher einen Schwingkörper aufweist, der gegenüber einem Substrat mit der Antriebsfrequenz in Schwingung versetzt werden kann. In diesem Falle ist der Drehratensensor insbesondere unempfindlich gegenüber externen Vibrationen mit einer Frequenz, die in der Nähe der Antriebsfrequenz des Schwingkörpers liegt.

Ein erfindungsgemäßes Verfahren zum Betreiben eines Sensors weist die folgenden Schritte auf:

- Erzeugen eines Sensorsignals, welches bei einer Antriebsfrequenz oszilliert;
- Demodulieren des Sensorsignals durch Multiplikation mit einem ersten Demodulationssignal, um aus dem Sensorsignal ein Rate-Signal zu erzeugen, in welchem eine Information über die zu messende Messgröße enthalten ist;
- Demodulieren des Sensorsignals durch Multiplikation mit einem um 90° zum ersten Demodulationssignal verschobenen zweiten Demodulationssignal, um aus dem Sensorsignal ein Quadratur-Signal zu erzeugen; und
- Entscheiden, ob das Quadratur-Signal oder ein daraus abgeleitetes Signal einer periodischen Oszillation unterliegt; und
- bei Vorliegen einer solchen periodischen Oszillation, Ausgeben eines Statussignals mit einem Wert, der anzeigt, dass das aktuelle Rate-Signal von einer auf den Sensor wirkenden externen Störung beeinflusst ist.

Bei diesem Verfahren ist es vorteilhaft, dass das Rate-Signal einer Korrektur unterzogen wird falls das Statussignal einen Wert aufweist, der anzeigt, dass das aktuelle Rate-Signal von einer auf den Sensor wirkenden externen Störung beeinflusst ist. Dies kann dadurch erfolgen, dass im Verfahren ferner folgende Schritte vorgesehen sind:

Phasenverschieben des Quadratur-Signals um 90° und Erzeugen eines um 90° phasenverschobenen Quadratur-Signals;

Erzeugen eines Differenzsignals durch Bildung der Differenz zwischen dem phasenverschobenen Quadratur-Signal und dem Rate-Signal; und

Ausgeben des Rate-Signals oder des vom Subtrahierer gebildete Differenzsignals in Abhängigkeit vom Status-Signal.

Kurze Beschreibung der Figuren

| Fig. 1 | ist ein Blockdiagramm, welches die Anordnung eines erfindungsgemäßen Drehratensensors gemäß einem ersten Ausführungsbeispiel zeigt. |
| Fig. 2 | ist eine schematische Darstellung einer Schwingungsmechanik. |
| Fign. 3A und 3B | sind Graphen, die das Sensorverhalten in einem Sensor gemäß der ersten Ausführungsform ohne das Vorliegen einer Störbeschleunigung illustrieren. |
| Fign. 4A und 4B | sind Graphen, die das Sensorverhalten gemäß der ersten Ausführungsform bei einer Störbeschleunigung darstellen. |
| Fig.5 | ist ein Blockschaltbild einer beispielhaften Ausführungsform der Auswerteschaltung. |
| Fig. 6 | ist ein Blockdiagramm, welches die Anordnung eines erfindungsgemäßen Drehratensensors gemäß einem zweiten Ausführungsbeispiel zeigt. |
| Fign. 7A und 7B | sind Graphen, die das Sensorverhalten gemäß der zweiten Ausführungsform bei einer Störbeschleunigung darstellen. |
| Fig. 8 | ist ein Blockschaltbild, welches schematisch den Aufbau der Korrekturschaltung zeigt. |

Ausführungsbeispiele

*Erstes Ausführungsbeispiel*

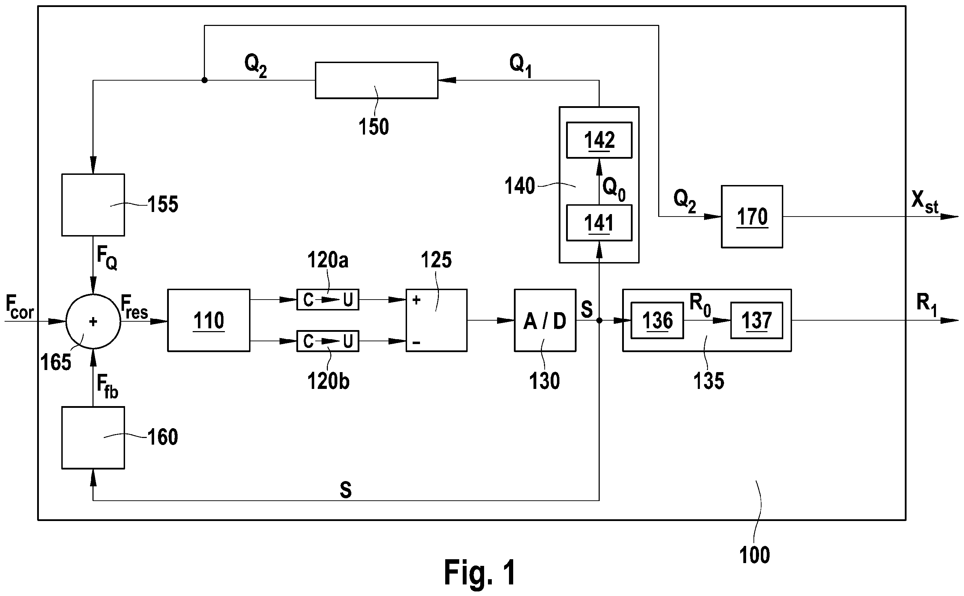

Fig. 1 ist ein Blockdiagramm, welches die Anordnung eines erfindungsgemäßen Drehratensensors 100 gemäß einem ersten Ausführungsbeispiel zeigt.

Kernstück des Sensors 100 ist eine Schwingungsmechanik 110. Wenn der Sensor 100 um eine bestimmte Drehachse verdreht wird, dann wirken auf die in der Schwingungsmechanik 110 vorgesehenen Messelektroden Corioliskräfte, die zu einer örtlichen Verschiebung der Messelektroden führen. Diese örtlichen Verschiebung wird kapazitiv gemessen und wie unten erläutert in ein Rate-Signal $R_1$ umgesetzt, welches eine Information über die örtliche Verschiebung und somit die auf den Sensor wirkende Drehrate enthält. Dies wird im Folgenden näher erläutert.

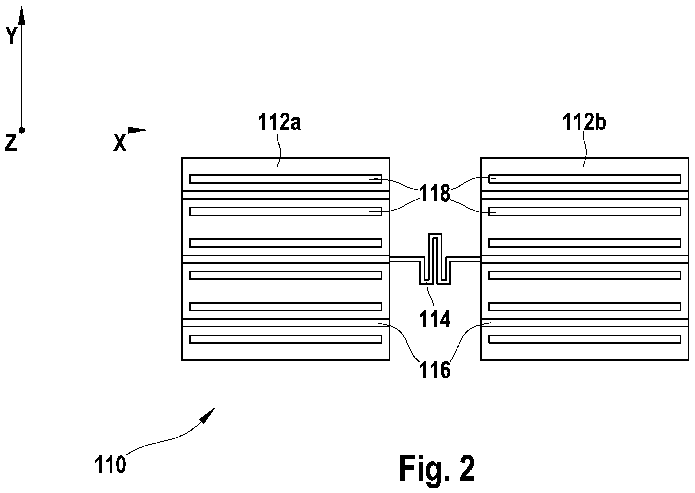

Fig. 2 ist eine schematische Darstellung der Schwingungsmechanik 110. Im vorliegenden Beispiel ist die Schwingungsmechanik 110 als Zwei-Masse-System mit zwei Linearschwingern 112a und 112b ausgelegt. Die zwei Linearschwinger 112a und 112b sind über eine Feder 114 mechanisch miteinander gekoppelt.

Jeder der zwei Linearschwinger 112a, 112b weist mehrere Aktor-Elektroden 116 auf, die auf einem Schwingkörper vorgesehen sind, der gegenüber einem Substrat in Schwingung mit einer Antriebsfrequenz $f_x$ versetzt werden kann. Die Anzahl der Aktor-Elektroden 116 ist nicht auf die in Fig. 2 dargestellte Anzahl begrenzt ist. Die Aktor-Elektroden 116 bilden ein Elektrodengitter. Jeder der Aktor-Elektroden 116 sind eine oder mehrere Stator-Elektroden 118 zugeordnet, die parallel zu den Aktor-Elektroden 116 angeordnet auf dem Substrat vorgesehen sind. Jede der Aktor-Elektroden 116 bildet somit mit den ihnen zugeordneten Stator-Elektroden 118 Kondensatoren aus je einer Aktor-Elektrode 116 und mindestens einer Stator-Elektrode 118.

Die Aktor-Elektroden 116 sind gegenüber den Stator-Elektroden 118 entlang der X-Achse beweglich gelagert. Wenn die Schwingungsmechanik 110 in Schwingung versetzt wird, bewegen sich somit die Aktor-Elektroden 116 entlang der x-Achse, wobei die Aktor-Elektroden 116 der Linearschwinger 112a und 112b sich anti-parallel zueinander in +X- bzw. -X-Richtung bewegen. Die gegenüber dem Substrat in Schwingung versetzbaren Teile der Linearschwinger 112a und 112b werden im Folgenden auch als "Schwingkörper" bezeichnet.

Werden die Linearschwinger 112a, 112b nun um die Z-Achse gedreht, so wirkt auf die bewegten Aktor-Elektroden 116 eine Corioliskraft $F_{cor}$. Die Corioliskraft $F_{cor}$ führt zu Kräften bei den Frequenzen $f_x - f_d$ und $f_x + f_d$ (mit $f_x$ = Antriebsfrequenz und $f_d$ = Frequenz der angelegten Drehrate), die in Y-Richtung wirken und den Abstand zwischen Aktor-Elektroden 116 und Stator-Elektroden 118 verändern. Somit verändert sich auch die Kapazität der von Aktor-Elektroden 116 und Stator-Elektroden 118 gebildeten Kondensatoren. Diese Kapazitätsänderung wird von Kapazitätsmessern 120a und 120b in entsprechende Spannungssignale umgesetzt. Dabei ist der Kapazitätsmesser 120a den Kapazitäten auf dem Linearschwinger 112a zugeordnet und der Kapazitätsmesser 120b ist den Kapazitäten auf dem Linearschwinger 112b zugeordnet. Die Kapazitätsmesser 120a, 120b geben jeweils ein Spannungssignal aus, welches der entsprechenden Kapazität auf dem zugeordneten Linearschwinger 112a bzw. 112b entspricht. Die von den Kapazitätsmessern 120a, 120b ausgegebenen Spannungssignale werden von einem Subtrahierer 125 voneinander subtrahiert. Das vom Subtrahierer 125 ausgegebene analoge Differenzsignal wird dann von einem Analog-Digital-Wandler 130 in ein digitales Sensorsignal S umgesetzt.

Der A/D-Wandler 130 gibt somit ein digitales Signal S aus, welches Informationen über die auf den Sensor 100 wirkenden Drehkräfte enthält. Dieses Signal S beinhaltet einen Rate-Anteil sowie einen dazu phasenverschobenen Quadratur-Anteil. Dabei ist der Rate-Anteil proportional zu der Geschwindigkeit des Schwingkörpers, wohingegen der Quadratur-Anteil proportional ist zur Auslenkung des Schwingkörpers. Der Rate-Anteil und der Quadratur-Anteil sind also genau um 90° phasenverschoben. Der Quadratur-Anteil entsteht aufgrund von Fertigungstoleranzen bzw. Asymmetrien in der Schwingungsmechanik 110, die von dem Subtrahierer 125 nicht ausgeglichen werden können.

Das Sensorsignal S wird einem Rate-Demodulator 135 zugeführt, welcher das Sensorsignal S nach Rate demoduliert. Der Rate-Demodulator 135 umfasst einen Multiplizierer 136 und einen Tiefpassfilter 137. Der Multiplizierer 136 multipliziert das Sensorsignal S mit einem ersten Demodulationssignal. Dieses erste Demodulationssignal ist beispielsweise proportional zu $\cos(2\pi f_x t)$, und ist mit dem Antrieb der Schwingungsmechanik synchronisiert. Hierdurch entsteht ein Rate-Signal $R_0$ mit zwei Seitenbändern, von welchen eines im oder nahe dem Basisband liegt. Durch anschließende Filterung mit dem Tiefpassfilter 137 kann somit ein tiefpassgefiltertes Rate-Signal $R_1$ gewonnen werden, welches eine Information über die am Sensor anliegende Drehrate enthält, und vom Sensor ausgegeben wird. Hierzu kann das Rate-Signal $R_1$ digital verstärkt, offsetkorrigiert und anschließend durch ein Filter gefiltert werden. Die gewonnenen Informationen können dann beispielsweise vom Sensor ausgegeben werden und in einem ESP-System, einem Roll-Over-Sensing-System oder auch in einem Navigationssystem weiterverarbeitet oder auch zur Entscheidungsfindung genutzt werden. Beispielsweise kann ein ESP-System auf Basis der ermittelten Drehrate sowie weiterer Informationen wie Lenkwinkel, Raddrehzahl und Beschleunigung in kritischen Fahrsituationen durch gezielte Bremseingriffe die Fahrstabilität des Fahrzeugs gewährleisten.

Das Sensorsignal S wird ferner einem Quadratur-Demodulator 140 zugeführt, welcher einen Multiplizierer 141 und einen Tiefpassfilter 142 umfasst. Der Multiplizierer 141 multipliziert das Sensorsignal S mit einem zweiten Demodulationssignal, wodurch sich das Signal $Q_0$ ergibt. Dieses zweite Demodulationssignal ist um 90 Grad phasenverschoben zum ersten Demodulationssignal und ist also beispielsweise proportional zu $\sin(2\pi f_x t)$. Das nach Quadratur demodulierte Signal $Q_0$ ergibt sich somit im Wesentlichen zu:

$$Q_0(t) = Y\left[x_0 \cdot \cos(2\pi \cdot f_x \cdot t)\right] \cdot \left[\Omega \cdot \cos(2\pi \cdot f_d \cdot t)\right] \cdot \left[\sin(2\pi \cdot f_x \cdot t)\right]$$

$$(1) \qquad = Y \cdot x_0 \cdot \left[\Omega \cdot \cos(2\pi \cdot f_d \cdot t)\right] \cdot \frac{1}{2}\sin(2\pi \cdot 2f_x \cdot t)$$

$$= Y \cdot x_0 \cdot \Omega \cdot \frac{1}{4} \cdot \left(\sin\left(2\pi \cdot (2f_x - f_d) \cdot t\right) + \sin\left(2\pi \cdot (2f_x + f_d) \cdot t\right)\right)$$

mit:

Y:     Proportionalitätsfaktor
$x_0$:    Antriebsamplitude
$f_x$:    Antriebsfrequenz
$f_d$:    Frequenz der Drehrate
$\Omega$:    Amplitude der Drehrate

Dieses Signal $Q_0$ weist also in der Regel nach der Demodulation im Wesentlichen keine Spektralanteile im Basisband auf, sondern hauptsächlich in der Nähe der doppelten Antriebsfrequenz $2f_x$ der Sensorelemente.

Das Signal $Q_0$ wird einem Tiefpassfilter 142 zugeführt, der beispielsweise dieselbe Bandbreite wie der hinter dem Demodulator 135 vorgesehene Tiefpassfilter aufweisen kann (z.B. 50 Hz oder 100Hz). Der Tiefpassfilter 142 gibt also ein tiefpassgefiltertes Quadratur-Signal $Q_1$ aus, aus welchem die Signalanteile um die doppelte Antriebsfrequenz $2f_x$ herausgefiltert sind.

Dieses tiefpassgefilterte Quadratur-Signal $Q_1$ wird einer Quadraturregelung 150 zugeführt. Die Quadraturregelung 150 erzeugt ein Rückkopplungssignal $Q_2$, mit welchem die Schwingungsmechanik 110 beeinflusst wird und welches so eingerichtet ist, dass das Quadratur-Signal Q im Betrieb im Wesentlichen auf Null geregelt wird. Mit anderen Worten, die Quadraturregelung 150 versucht im Betrieb das Quadratur-Signal $Q_1$ auf Null zu regeln. Die Quadraturregelung 150 kann beispielsweise als pid-Regler ausgeführt sein.

Das Rückkopplungssignal $Q_2$ ist eine Spannung, die an Q-Elektroden 155 auf dem Schwingkörper und dem Substrat der Schwingungsmechanik 110 angelegt wird. Durch diese Spannung wird an den Q-Elektroden 155 eine auf den Schwingkörper wirkende elektrostatische Kraft $F_Q$ erzeugt.

Ferner wird das am Ausgang des A/D-Wandler entstehende Sensorsignal S zurückgekoppelt und an Feedback-Elektroden 160 auf dem Schwingkörper und dem Substrat der Schwingungsmechanik 110 angelegt. Dadurch wird an den Feedback-Elektroden 160 eine auf den Schwingkörper wirkende elektrostatische Kraft $F_{fb}$ erzeugt.

Die elektrostatischen Kräfte $F_Q$ und $F_{fb}$ überlagern sich mit der auf den Schwingkörper wirkenden Corioliskraft $F_{cor}$ und ergeben die resultierende Kraft $F_{res} = F_{cor} + F_Q + F_{fb}$, was im Blockschaltbild schematisch durch den Addierer 165 dargestellt ist. Der Addierer 165 stellt also kein tatsächliches Bauelement dar, sondern symbolisiert lediglich schematisch die Überlagerung der verschiedenen Kraftvektoren.

Es ist somit ein Regelkreis vorgesehen, der die Schwingungsmechanik 110 mit dem Schwingkörper und den darauf vorgesehenen Q-Elektroden 155 und Feedback-Elektroden 160, sowie die Kapazitätsmesser 120a, 120b, den Subtrahierer 125, den A/D-Wandler 130, den Demodulator 140 und die Quadraturregelung 150 umfasst.

Der Sensor 100 weist ferner eine Auswerteschaltung 170 auf, die das Rückkopplungssignal $Q_2$ auswertet und ein daraus abgeleitetes Statussignal $X_{st}$ ausgibt. Genauer gesagt, entscheidet die Auswerteschaltung 170, ob das Rückkopplungssignal $Q_2$ einer periodischen Oszillation unterliegt. Unterliegt das Rückkopplungssignal $Q_2$ einer periodischen Oszillation, so gibt die Auswerteschaltung 170 ein Statussignal $X_{st}$ mit einem Wert (z.B. $X_{st}$ = HI) aus, der anzeigt, dass das aktuelle Rate-Signal $R_1$ von einer auf den Sensor wirkenden Störbeschleunigung bzw. Vibration beeinflusst ist. Mit anderen Worten, das Statussignal $X_{st}$ markiert das Sensorsignal als fehlerhaft. Entscheidet die Auswerteschaltung 170, dass das Rückkopplungssignal $Q_2$ nicht einer periodischen Oszillation unterliegt, so gibt sie ein Statussignal $X_{st}$ mit einem Wert (z.B. $X_{st}$ = LO) aus, der anzeigt, dass das aktuelle Rate-Signal $R_1$ nicht fehlerhaft ist.

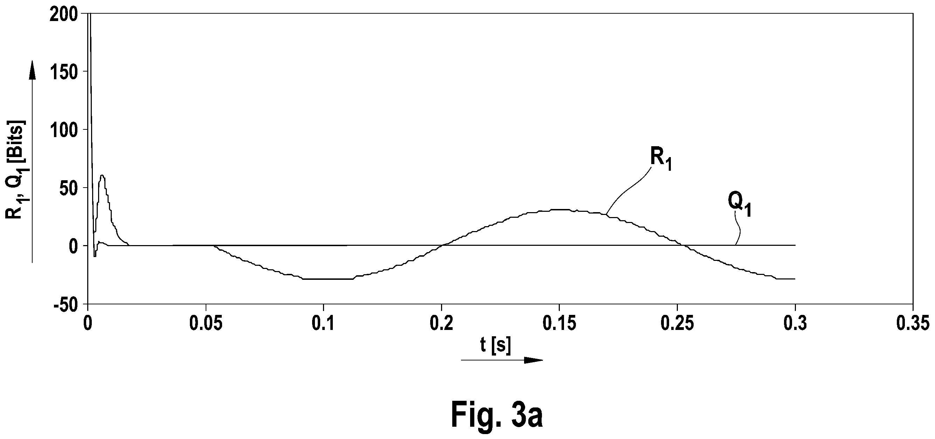

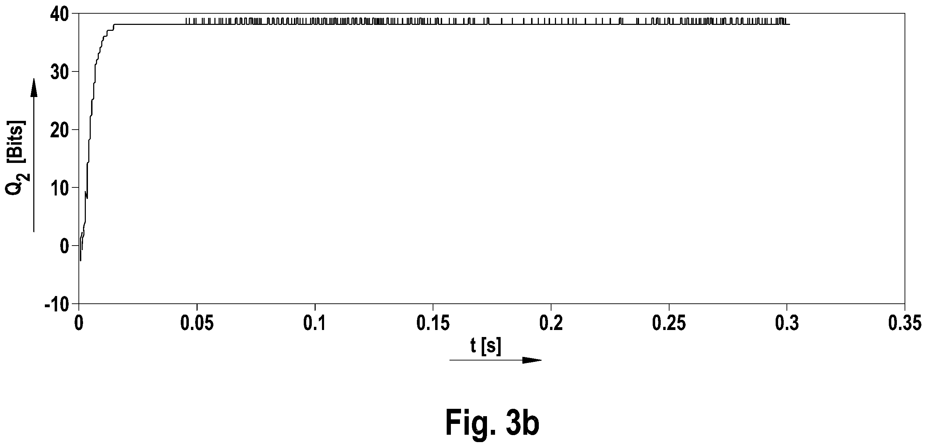

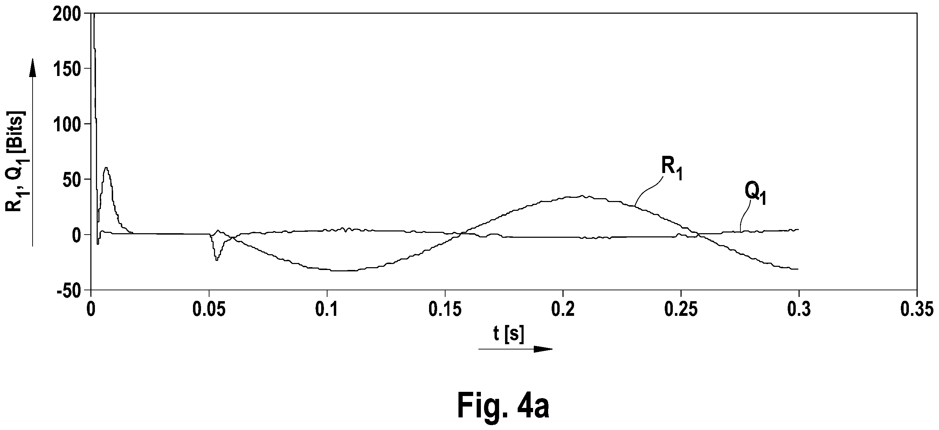

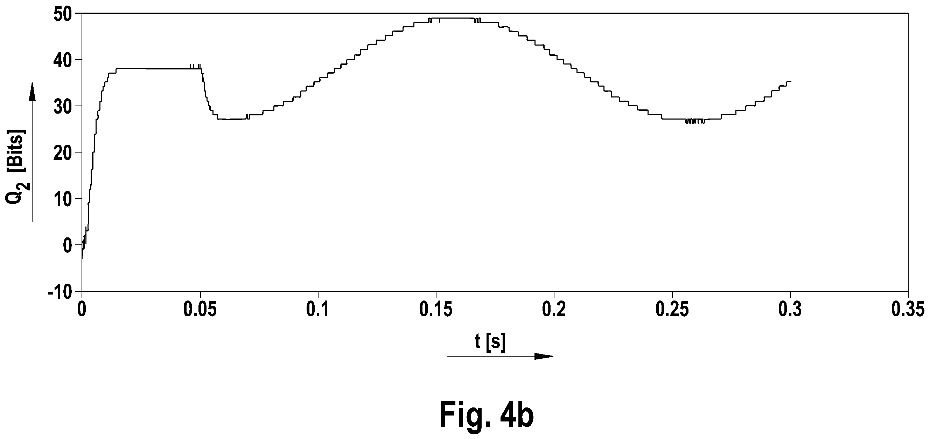

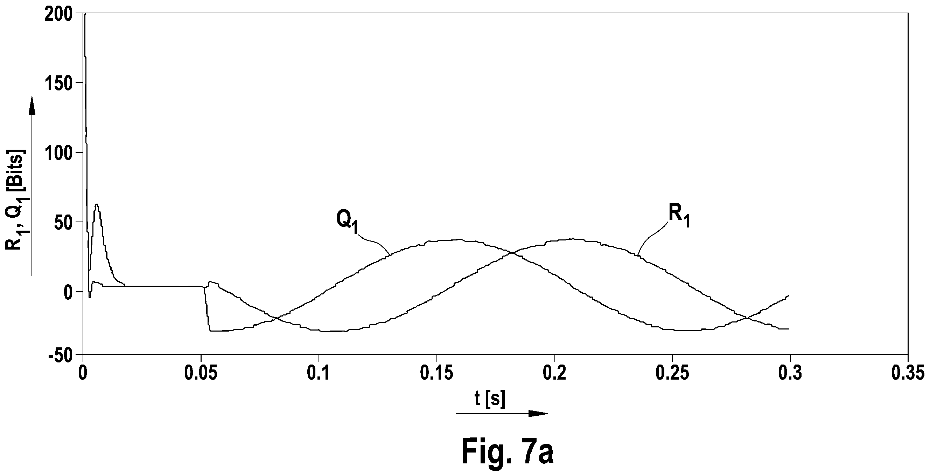

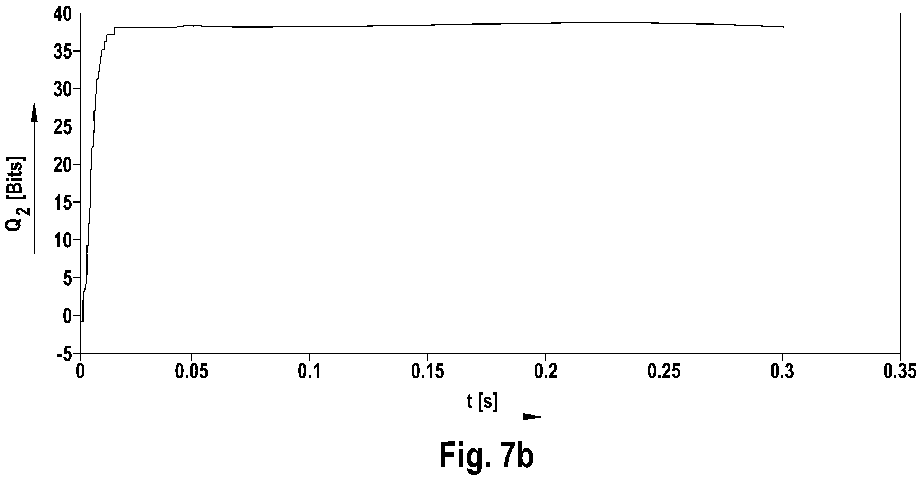

Die Figuren 3A und 3B illustrieren das Verhalten des Sensors 110 im Betrieb für den Fall, dass der Sensor 100 ab der Zeit t = 0,05s mit einer Drehrate gedreht wird, deren Amplitude $\Omega$ etwa 120°/s beträgt und deren Drehfrequenz $f_d$ etwa 5 Hz beträgt. Es wirkt keine Störbeschleunigung auf den Sensor 100. Genauer gesagt, ist Fig. 3A ein Graph, der den Verlauf der Signale $R_1(t)$ und $Q_1(t)$ darstellt, während Fig. 3B den Verlauf des Rückkopplungssignals $Q_2(t)$ darstellt. Die horizontale Achse von Fig. 3A bzw. 3B ist die Zeitachse, und die vertikale Achse von Fig. 3A bzw. 3B zeigt den Wert der Signale in Bits. Gleiches gilt entsprechend auch für die Figuren 4A, 4B und 7A, 7B.

Der Sensor 100 unterliegt, wie zu erwarten, einem Einschwingvorgang, der hier weniger als 0,05s dauert. Am Ende des Einschwingvorgangs sind sowohl $R_1$ als auch $Q_1$ auf etwa 0 geregelt, was anzeigt, dass keine Drehbeschleunigung auf den Sensor 100 wirkt. Das Ausgangssignal $Q_2$ der Quadraturregelung hat zu diesem Zeitpunkt einen konstanten Wert angenommen. Wirkt nun eine Drehbeschleunigung mit einer Drehfrequenz $f_d$ von 5 Hz auf den Sensor 100, so bewirkt die resultierende Corioliskraft in der oben beschriebenen Art und Weise eine Änderung des Rate-Signals $R_1$ mit derselben Frequenz. Die Amplitude des Rate-Signals $R_1$ entspricht dabei der Amplitude der Drehbeschleunigung. Durch Auswerten des Rate-Signals $R_1$ kann somit auf Amplitude und Frequenz der Drehbewegung geschlossen werden.

Aufgrund der Regelung mit dem Quadraturregler 150 bleibt das Quadratur-Signal $Q_1$ näherungsweise bei Null. Das Signal $Q_2$ zeigt ein typisches Reglerverhalten. Es unterliegt dabei keiner periodischen Oszillation. Folglich gibt die Auswerteschaltung 170 ein Statussignal $X_{st}$ mit dem Wert "LO" aus, der anzeigt, dass der Sensor keiner externen Vibrationsstörung unterliegt.

Figuren 4A und 4B illustrieren das Verhalten des Sensors 110 im Betrieb für den Fall, dass der Sensor 100 nicht gedreht wird, sondern auf den Sensor 100 eine Vibration mit einer Störfrequenz $f_x + f_s$ wirkt. In diesem Falle ergibt sich das nach Quadratur demodulierte Signal $Q_0$ zu:

$$Q_0(t) = X[A \cdot \sin(2\pi \cdot (f_x + f_s) \cdot t)][\sin(2\pi \cdot f_x \cdot t)]$$
$$= X \cdot A \cdot \frac{1}{2} \cdot (\cos(2\pi \cdot f_s \cdot t) - \cos(2\pi \cdot (2f_x + f_s) \cdot t)) \tag{2}$$

mit:

X:        Proportionalitätsfaktor
A:        Amplitude der externen Störbeschleunigung
$f_x$:       Antriebsfrequenz
$f_x + f_s$:    Frequenz der externen Störbeschleunigung

Dieses Signal $Q_1(t)$ wird in den Tiefpassfilter 142 gegeben. Der zweite Term auf der rechten Seite der zweiten Zeile in Gleichung (2) entspricht einem hochfrequenten Anteil, der mehr als doppelt so groß ist wie die Antriebsfrequenz $f_x$. Allerdings wird der erste Term (proportional $\cos(2\pi f_s t)$ dann nicht vom Tiefpassfilter 142 ausgefiltert, wenn die Frequenz $f_s$ klein ist. Dies ist insbesondere dann der Fall, wenn die Frequenz der externen Störbeschleunigung gleich der Antriebsfrequenz $f_x$ plus/minus einer Frequenz $f_s$ kleiner der Eckfrequenz des Tiefpassfilters 142 ist.

Diese Situation ist in den Fign. 4A und 4B dargestellt. Ab der Zeit t = 0,05s wird eine externe Beschleunigung ($f_s$ = 5Hz, A = 2g) in Detektionsrichtung auf den Sensor 100 gegeben. Aufgrund von Asymmetrien im Sensor entsteht ein digitalisiertes, periodisches Quadratursignal $Q_1$ mit der Frequenz $f_s$. Dem Quadraturregler 150 wird dieses periodische Signal $Q_1$ zugeführt. Der Quadraturregler 150 versucht nun dieses Signal auf Null zu regeln, so dass auch das Rück-kopplungssignal $Q_2$ beginnt, mit der Frequenz $f_s$ zu oszillieren. Dieses Signal $Q_2$ wirkt auf die Q-Elektroden und bewirkt somit eine periodische elektrostatische Kraft auf den Schwingkörper. Diese wird wiederum in ein periodisches Rate-Signal $R_1$ umgesetzt, welches mit einer bestimmten Amplitude (hier ca. 33 bit) oszilliert, obwohl keine Drehrate auf den Sensor wirkt.

Das Rückkopplungssignal $Q_2$ wird der Auswerteschaltung 170 zugeführt, welche entscheidet, dass das Rück-kopplungssignal $Q_2$ einer periodischen Oszillation unterliegt und folglich ein Statussignal $X_{st}$ mit einem Wert (z.B. "HI") ausgibt, der anzeigt, dass das vom Sensor erzeugte Rate-Signal $R_1$ fehlerbehaftet ist.

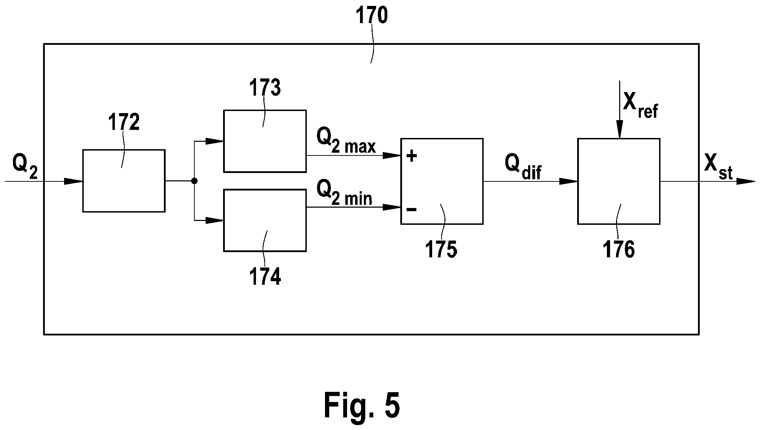

Fig. 5 zeigt eine detailliertere Darstellung einer beispielhaften Ausführungsform der Auswerteschaltung 170. In diesem Beispiel umfasst die Auswerteschaltung 170 einen Hochpassfilter 172 (alternativ kann auch ein Bandpassfilter vorgesehen werden), zwei Peak-Hold-Schaltungen 173, 174, einen Subtrahierer 175 und einen Vergleicher 176. Das Rückkopplungssignal $Q_2$ wird dem Hochpassfilter 172 zugeführt. Das vom Hochpassfilter 172 hochpassgefilterte Signal $Q_2$ wird den beiden Peak-Hold-Schaltungen 173, 174 zugeführt. Die Peak-Hold-Schaltung 173 bestimmt den maximalen Wert $Q_{2max}$, den das hochpassgefilterte Signal $Q_2$ in einem rollenden Zeitfenster annimmt, wohingegen die Peak-Hold-Schaltung 174 den minimalen Wert $Q_{2max}$ bestimmt, den das hochpassgefilterte Signal $Q_2$ in diesem Zeitfenster annimmt. Der Subtrahierer 175 subtrahiert den Wert $Q_{2min}$ vom Wert $Q_{2max}$ und bestimmt so ein Differenzsignal $Q_{dif}$, welches dem Peak-to-Peak-Abstand im betrachteten Zeitfenster entspricht. Der Vergleicher 176 vergleicht das Signal $Q_{dif}$ mit einem vorbestimmten oder dynamisch bestimmten Referenzwert $X_{ref}$. Falls $Q_{dif}$ größer als der Referenzwert $X_{ref}$ ist, so gibt der Vergleicher 176 ein Status-Signal $X_{st}$ mit Wert "HI" aus, was anzeigt, dass das vom Sensor 100 ausgegebene Rate-Signal $R_1$ von einer externen Störung beeinflusst ist. Anderenfalls gibt der Vergleicher ein Status-Signal $X_{st}$ mit Wert "LO" aus.

Die oben beschriebene Ausführung der Auswerteschaltung 170 ist lediglich beispielhaft und es kann eine beliebige Auswerteschaltung verwendet werden, die in der Lage ist, eine periodische Oszillation des Rückkopplungs-signals $Q_2$ zu erkennen. Ferner kann die Auswerteschaltung auch durch Elemente ergänzt werden, die sicherstellen, dass das Status-Signal $X_{st}$ nur dann auf "HI" gesetzt wird, wenn tatsächlich eine Oszillation um den annähernd konstanten Wert nach dem Einschwingvorgang vorliegt, also wenn $Q_{2min}$ kleiner als dieser Wert und $Q_{2max}$ größer als dieser Wert ist.

*Zweites Ausführungsbeispiel*

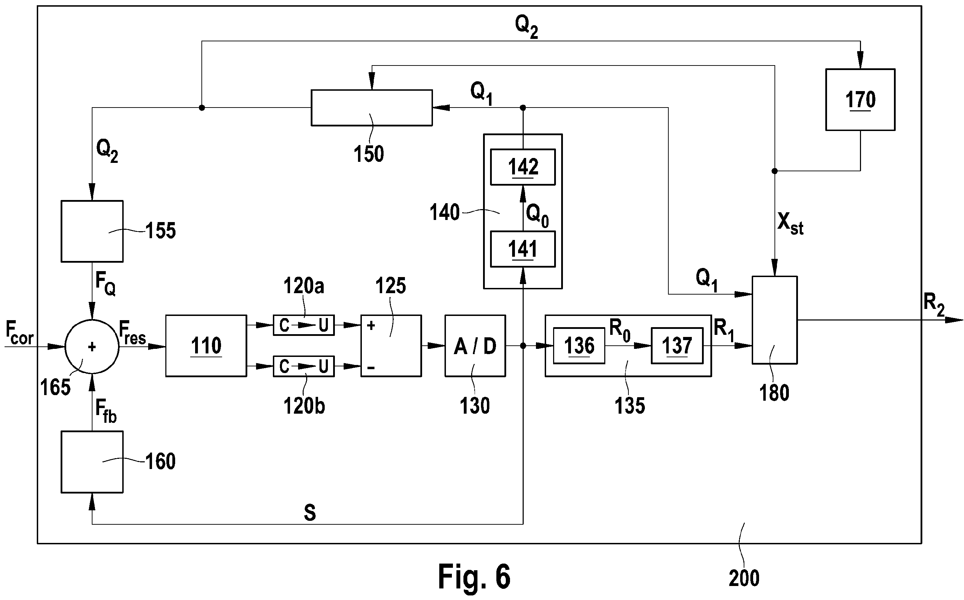

Fig. 6 ist ein Blockdiagramm, welches die Anordnung eines erfindungsgemäßen Sensors 200 gemäß einem zweiten Ausführungsbeispiel erläutert.

Komponenten, die solchen des Sensors 100 des ersten Ausführungsbeispiels in Fig. 1 entsprechen, sind mit gleichen Bezugszeichen gekennzeichnet und werden nicht näher erläutert. Der Sensor 200 in Fig. 6 unterscheidet sich von dem Sensor 100 gemäß des ersten Ausführungsbeispiels dadurch, dass ferner eine Korrekturschaltung 180 vorgesehen ist, welcher das Rate-Signal $R_1$ und das Quadratur-Signal $Q_1$ zugeführt werden, und welcher ein korrigiertes Rate-Signal $R_2$ ausgibt. Genauer gesagt gibt die Korrekturschaltung 180 das Rate-Signal $R_1$ unverändert aus, falls das Status-Signal $X_{st}$ den Wert "LO" hat, und gibt ein korrigiertes Rate-Signal aus, falls das Status-Signal $X_{st}$ den Wert "HI" hat.

Ferner wird in dieser Ausführungsform, im Unterschied zur ersten Ausführungsform, die Regelung mit dem Quadraturregler 150 angehalten, sobald das Statussignal $X_{st}$ ein fehlerhaftes Rate-Signal $R_1$ markiert. Hierzu wird das von der Auswerteschaltung 170 ausgegebene Status-Signal $X_{st}$ auch dem Quadraturregler 150 zugeführt. Wenn das Status-Signal $X_{st}$ von LO nach HI springt, also mit anderen Worten wenn das Statussignal $X_{st}$ einen Wert annimmt, der anzeigt, dass das aktuelle Rate-Signal $R_1$ von einer auf den Sensor wirkenden externen Störung beeinflusst ist, dann klemmt der Quadraturregler 150 das Rückkopplungssignal $Q_2$ bei seinem aktuellen Wert fest, also bei dem Wert zum Zeitpunkt des Übergangs von LO nach HI. Somit wird vermieden, dass die periodische Oszillation des Rückkopplungs-signals $Q_2$ das Rate-Signal $R_1$ beeinflusst. Springt das Status-Signal $X_{st}$ zurück auf einen Wert, der keinen Fehler im aktuellen Rate-Signal $R_1$ anzeigt, dann wird der Quadraturregler 150 wieder eingeschaltet.

Fign. 7A und 7B illustrieren das Verhalten des Sensors 200 für den Fall einer externen Vibrationsstörung mit der Frequenz $f_x + f_s$, die ab 0,05s am Sensor anliegt. Das Rückkopplungssignal $Q_2$ ist in diesem Beispiel nach dem Einschwingvorgang konstant gehalten (siehe Fig. 7B). Wie in Fig. 7A erkennbar ist, liegen im Falle dieser externen Vibrationsstörung periodisch oszillierende Signale $R_1$ und $Q_1$ vor, die um 90° gegeneinander phasenverschoben sind, aber im Wesentlichen die gleiche Amplitude aufweisen. Der Sensor 200 macht sich diese Tatsache zunutze, um das Rate-Signal $R_1$ zu korrigieren.

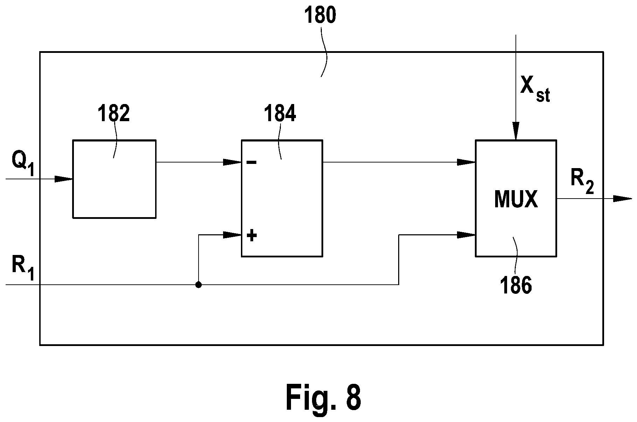

Fig. 8 ist ein Blockschaltbild, welches schematisch den Aufbau der Korrekturschaltung 180 zeigt. Die Korrekturschaltung 180 weist einen Phasenschieber 182, einen Subtrahierer 184 und einen Multiplexer 186 auf. Der Phasenschieber 182 verschiebt das ihm zugeführte Signal $Q_1$ um +90°. Dieser Phasenschieber 182 kann beispielsweise durch ein Schieberegister, ein Verzögerungsglied oder dergleichen verwirklicht werden.

Das um +90° phasenverschobene Signal $Q_1$ wird ebenso wie das Rate-Signal $R_1$ dem Subtrahierer 184 zugeführt, der das phasenverschobene Signal $Q_1$ vom Rate-Signal $R_1$ subtrahiert. Das vom Subtrahierer 184 ausgegebene Differenzsignal ist also ein korrigiertes Signal, in welchem der von der Störbeschleunigung bzw. Vibration verursachte Fehler kompensiert wurde. Das vom Subtrahierer 184 ausgegebene Differenzsignal wird ebenso wie das Rate-Signal $R_1$ dem Multiplexer 186 zugeführt. Dem Multiplexer 186 wird ferner das Status-Signal $X_{st}$ als Steuersignal zugeführt. Ist das Status-Signal $X_{st}$ "LO", dann gibt die Korrekturschaltung 180 das unveränderte Rate-Signal $R_1$ als Ausgangssignal $R_2$ aus. Ist das Status-Signal $X_{st}$ "HI", dann gibt die Korrekturschaltung 180 das korrigierte Rate-Signal $R_1$, also das vom Subtrahierer 184 ausgegebene Differenzsignal aus.

Mit dieser Anordnung nimmt im Falle einer externen Vibrationsstörung das Status-Signal $X_{st}$ den Wert "HI" an und das ausgegebene Rate-Signal $R_1$ wird automatisch korrigiert. Klingt die Vibrationsstörung ab, so ist auch das Rückkopplungssignal $Q_2$ nicht mehr periodisch, so dass das Status-Signal $X_{st}$ wieder den Wert "LO" annimmt und das unkorrigierte Rate-Signal $R_1$ als von der Korrekturschaltung 180 ausgegeben wird.

Obwohl die obige Ausführungsform vorstehend anhand von bevorzugten Ausführungsbeispielen beschrieben wurde, ist sie darauf nicht beschränkt, sondern auf vielfältige Art und Weise modifizierbar. Insbesondere sind verschiedene Merkmale der oben beschriebenen Ausgestaltungen miteinander kombinierbar.

Beispielsweise ist der Sensor nicht auf einen Drehratensensor beschränkt. Vielmehr ist das erfindungsgemäße Prinzip auf alle Sensoren anwendbar, in welchen ein Sensorsignal nach Rate und nach Quadratur demoduliert wird. Ferner liegt im Falle eines Drehratensensors keine Beschränkung auf Linearschwinger vor, vielmehr kann die Erfindung auch auf Drehschwinger angewandt werden.

Weiterhin wurden die obigen Ausführungsbeispiele für den Fall erläutert, dass ein A/D-Wandler 130 ein digitales Sensorsignal erzeugt, welches dann weiterverarbeitet wird. Es ist jedoch ebenso möglich, dass der Sensor ein analoges Signal erzeugt und dieses Signal analog weiterverarbeitet wird. In diesem Zusammenhang sollte angemerkt werden, dass die Weiterverarbeitung des Sensorsignals S mit diskreten Komponenten (Demodulatoren 135, 140, Filter 137, 142 usw.) dargestellt wurde. Selbstverständlich können diese Komponenten aber auch mit Hilfe eines programmgesteuerten Prozessors, insbesondere als ASIC, realisiert werden. Sie müssen also nicht notwendigerweise als diskrete Komponenten verwirklicht werden.

**Patentansprüche**

1. Sensor (100, 200) zum Messen einer Messgröße, der dazu ausgebildet ist, ein Sensorsignal (S) zu erzeugen, welches bei einer Antriebsfrequenz ($f_x$) oszilliert, wobei der Sensor (100, 200) folgendes aufweist:

   - einen Rate-Demodulator (135), der dazu ausgebildet ist, das Sensorsignal (S) durch Multiplikation mit einem ersten Demodulationssignal zu demodulieren, um aus dem Sensorsignal (S) ein Rate-Signal ($R_1$) zu erzeugen, in welchem eine Information über die zu messende Messgröße enthalten ist;
   - einen Quadratur-Demodulator (140), der dazu ausgebildet ist, das Sensorsignals (S) durch Multiplikation mit einem um 90° zum ersten Demodulationssignal verschobenen zweiten Demodulationssignal zu demodulieren, um aus dem Sensorsignal (S) ein Quadratur-Signal ($Q_1$) zu erzeugen; **dadurch gekennzeichnet, dass** der Sensor (100, 200)
   - eine Auswerteschaltung (170) aufweist, die dazu ausgebildet ist, zu entscheiden, ob das Quadratur-Signal ($Q_1$) oder ein daraus abgeleitetes Signal ($Q_2$) einer periodischen Oszillation unterliegt, und bei Vorliegen einer periodischen Oszillation ein Statussignal ($X_{st}$) mit einem Wert auszugeben, der anzeigt, dass das aktuelle Rate-Signal ($R_1$) von einer auf den Sensor (100, 200) wirkenden externen Störung beeinflusst ist.

2. Sensor (100, 200) nach Anspruch 1, ferner aufweisend:

   einen Quadraturregler (150), der dazu ausgebildet ist, das Quadratur-Signal ($Q_1$) zu empfangen und ein Rückkopplungssignal ($Q_2$) zu erzeugen, welches im Sensor (100, 200) rückgekoppelt wird, um das Quadratur-Signal ($Q_1$) auf im Wesentlichen Null zu regeln;
   wobei die Auswerteschaltung (170) dazu ausgebildet ist, zu entscheiden, ob dieses Rückkopplungssignal ($Q_2$) einer periodischen Oszillation unterliegt.

3. Sensor (100, 200) nach Anspruch 2, wobei dem Quadraturregler (150) ferner das Statussignal ($X_{st}$) zugeführt wird und wobei der Quadraturregler (150) dazu ausgebildet ist, das Rückkopplungssignal ($Q_2$) bei seinem momentanen Wert festzuklemmen, wenn das Statussignal ($X_{st}$) auf einen Wert springt, der anzeigt, dass das aktuelle Rate-Signal ($R_1$) von einer auf den Sensor (100, 200) wirkenden externen Störung beeinflusst ist.

**4.** Sensor (100, 200) nach einem der vorhergehenden Ansprüche, ferner aufweisend:

eine Korrekturschaltung (180), der das Statussignal ($X_{st}$) und das Rate-Signal ($R_1$) zugeführt werden, und die dazu ausgebildet ist, in dem Fall, dass das Statussignal ($X_{st}$) einen Wert aufweist, der anzeigt, dass das aktuelle Rate-Signal ($R_1$) von einer auf den Sensor wirkenden externen Störung beeinflusst ist, das Rate-Signal ($R_1$) einer Korrektur zu unterziehen.

**5.** Sensor (100, 200) nach Anspruch 4, wobei die Korrekturschaltung (180) folgendes aufweist:

- einen Phasenschieber (182), der dazu ausgebildet ist, das Quadratur-Signal ($Q_1$) um 90° phasenzuverschieben und ein um 90° phasenverschobenes Quadratur-Signal ($Q_1$) auszugeben;
- einen Subtrahierer, (184) der dazu ausgebildet ist, die Differenz zwischen dem phasenverschobenes Quadratur-Signal ($Q_1$) und dem Rate-Signal ($R_1$) zu bilden und als Differenzsignal (Qdif) auszugeben;
- einen Multiplexer (186), der dazu ausgebildet ist, in Abhängigkeit vom Status-Signal ($X_{st}$) entweder das Rate-Signal ($R_1$) oder das vom Subtrahierer (184) gebildete Differenzsignal auszugeben.

**6.** Sensor (100, 200) nach einem der vorhergehenden Ansprüche, wobei der Sensor (100, 200) als Drehratensensor ausgebildet ist und einen Schwingkörper aufweist, der gegenüber einem Substrat mit der Antriebsfrequenz ($f_x$) in Schwingung versetzt werden kann.

**7.** Verfahren zum Betreiben eines Sensors (100, 200), mit den folgenden Schritten:

- Erzeugen eines Sensorsignals (S), welches bei einer Antriebsfrequenz ($f_x$) oszilliert;
- Demodulieren des Sensorsignals (S) durch Multiplikation mit einem ersten Demodulationssignal, um aus dem Sensorsignal (S) ein Rate-Signal ($R_1$) zu erzeugen, in welchem eine Information über die zu messende Messgröße enthalten ist;
- Demodulieren des Sensorsignals (S) durch Multiplikation mit einem um 90° zum ersten Demodulationssignal verschobenen zweiten Demodulationssignal, um aus dem Sensorsignal (S) ein Quadratur-Signal ($Q_1$) zu erzeugen;

**gekennzeichnet durch** die Schritte:

- Entscheiden, ob das Quadratur-Signal ($Q_1$) oder ein daraus abgeleitetes Signal ($Q_2$) einer periodischen Oszillation unterliegt; und
- bei Vorliegen einer solchen periodischen Oszillation, Ausgeben eines Statussignals ($X_{st}$) mit einem Wert, der anzeigt, dass das aktuelle Rate-Signal ($R_1$) von einer auf den Sensor (100, 200) wirkenden externen Störung beeinflusst ist.

**8.** Verfahren nach Anspruch 7, wobei in dem Fall, dass das Statussignal ($X_{st}$) einen Wert aufweist, der anzeigt, dass das aktuelle Rate-Signal ($R_1$) von einer auf den Sensor wirkenden externen Störung beeinflusst ist, das Rate-Signal ($R_1$) einer Korrektur unterzogen wird.

**9.** Verfahren nach Anspruch 8, wobei ferner folgende Schritte vorgesehen sind: Phasenverschieben des Quadratur-Signals um 90° und Erzeugen eines um 90° phasenverschobenen Quadratur-Signals;
Erzeugen eines Differenzsignals durch Bildung der Differenz zwischen dem phasenverschobenen Quadratur-Signal und dem Rate-Signal ($R_1$); und
Ausgeben des Rate-Signals ($R_1$) oder des vom Subtrahierer gebildete Differenzsignals in Abhängigkeit vom Status-Signal ($X_{st}$).

**10.** Verfahren nach einem der Ansprüche 7 bis 9, wobei der Sensor als Drehratensensor ausgebildet ist und einen Schwingkörper aufweist, der gegenüber einem Substrat mit der Antriebsfrequenz ($f_x$) in Schwingung versetzt werden kann.

**Claims**

**1.** Sensor (100, 200) for measuring a measurement variable, which sensor is designed to generate a sensor signal (S) which oscillates at a drive frequency ($f_x$), the sensor (100, 200) having the following:

- a rate demodulator (135) which is designed to demodulate the sensor signal (S) by multiplying it by a first demodulation signal in order to use the sensor signal (S) to generate a rate signal ($R_1$) containing an item of information relating to the measurement variable to be measured;

- a quadrature demodulator (140) which is designed to demodulate the sensor signal (S) by multiplying it by a second demodulation signal shifted through 90° with respect to the first demodulation signal in order to use the sensor signal (S) to generate a quadrature signal ($Q_1$);

**characterized in that** the sensor (100, 200) has an evaluation circuit (170) which is designed to decide whether the quadrature signal ($Q_1$) or a signal ($Q_2$) derived therefrom is subject to a periodic oscillation and, if there is a periodic oscillation, to output a status signal ($X_{st}$) with a value indicating that the current rate signal ($R_1$) is influenced by external interference acting on the sensor (100, 200).

2. Sensor (100, 200) according to Claim 1, also having:

a quadrature controller (150) which is designed to receive the quadrature signal ($Q_1$) and to generate a feedback signal ($Q_2$) which is fed back into the sensor (100, 200) in order to control the quadrature signal ($Q_1$) to substantially zero;

the evaluation circuit (170) being designed to decide whether this feedback signal ($Q_2$) is subject to a periodic oscillation.

3. Sensor (100, 200) according to Claim 2, the status signal ($X_{st}$) also being supplied to the quadrature controller (150), and the quadrature controller (150) being designed to clamp the feedback signal ($Q_2$) at its current value if the status signal ($X_{st}$) jumps to a value indicating that the current rate signal ($R_1$) is influenced by external interference acting on the sensor (100, 200).

4. Sensor (100, 200) according to one of the preceding claims, also having:

a correction circuit (180) which is supplied with the status signal ($X_{st}$) and the rate signal ($R_1$) and is designed to subject the rate signal ($R_1$) to a correction if the status signal ($X_{st}$) has a value indicating that the current rate signal ($R_1$) is influenced by external interference acting on the sensor.

5. Sensor (100, 200) according to Claim 4, the correction circuit (180) having the following:

- a phase shifter (182) which is designed to phase-shift the quadrature signal ($Q_1$) through 90° and to output a quadrature signal ($Q_1$) which has been phase-shifted through 90°;
- a subtractor (184) which is designed to form the difference between the phase-shifted quadrature signal ($Q_1$) and the rate signal ($R_1$) and to output it as a differential signal (Qdif);
- a multiplexer (186) which is designed to output either the rate signal ($R_1$) or the differential signal formed by the subtractor (184) on the basis of the status signal ($X_{st}$).

6. Sensor (100, 200) according to one of the preceding claims, the sensor (100, 200) being in the form of a rate-of-rotation sensor and having an oscillation body which can be caused to oscillate at the drive frequency ($f_x$) with respect to a substrate.

7. Method for operating a sensor (100, 200), having the following steps of:

- generating a sensor signal (S) which oscillates at a drive frequency ($f_x$);
- demodulating the sensor signal (S) by multiplying it by a first demodulation signal in order to use the sensor signal (S) to generate a rate signal ($R_1$) containing an item of information relating to the measurement variable to be measured;
- demodulating the sensor signal (S) by multiplying it by a second demodulation signal shifted through 90° with respect to the first demodulation signal in order to use the sensor signal (S) to generate a quadrature signal ($Q_1$);

**characterized by** the steps of:

- deciding whether the quadrature signal ($Q_1$) or a signal ($Q_2$) derived therefrom is subject to a periodic oscillation; and
- if there is such a periodic oscillation, outputting a status signal ($X_{st}$) with a value indicating that the current rate signal ($R_1$) is influenced by external interference acting on the sensor (100, 200).

**8.** Method according to Claim 7, the rate signal ($R_1$) being subjected to a correction if the status signal ($X_{st}$) has a value indicating that the current rate signal ($R_1$) is influenced by external interference acting on the sensor.

**9.** Method according to Claim 8, the following steps also being provided: phase-shifting the quadrature signal through 90° and generating a quadrature signal which has been phase-shifted through 90°;
generating a differential signal by forming the difference between the phase-shifted quadrature signal and the rate signal ($R_1$); and
outputting the rate signal ($R_1$) or the differential signal formed by the subtractor on the basis of the status signal ($X_{st}$).

**10.** Method according to one of Claims 7 to 9, the sensor being in the form of a rate-of-rotation sensor and having an oscillation body which can be caused to oscillate at the drive frequency ($f_x$) with respect to a substrate.

**Revendications**

**1.** Capteur (100, 200) destiné à mesurer une grandeur de mesure, conçu pour générer un signal de capteur (S) qui oscille à une fréquence d'entraînement ($f_x$), dans lequel le capteur (100, 200) comprend ce qui suit :

- un démodulateur de vitesse (135) conçu pour démoduler le signal de capteur (S) par multiplication par un premier signal de démodulation afin de générer à partir du signal de capteur (S) un signal de vitesse ($R_1$) dans lequel est contenue une information concernant la grandeur de mesure à mesurer ;
- un démodulateur en quadrature (140) conçu pour démoduler le signal de capteur (S) par multiplication par un deuxième signal de démodulation décalé de 90° par rapport au premier signal de démodulation afin de générer à partir du signal de capteur (S) un signal en quadrature ($Q_1$) ;

**caractérisé en ce que** le capteur (100, 200) comporte

- un circuit d'évaluation (170) conçu pour décider si le signal en quadrature ($Q_1$) ou un signal ($Q_2$) dérivé de celui-ci est soumis à une oscillation périodique et, lors de la présence d'une oscillation périodique, pour délivrer un signal d'état ($X_{st}$) ayant une valeur qui indique que le signal de vitesse effectif ($R_1$) est influencé par une perturbation externe agissant sur le capteur (100, 200).

**2.** Capteur (100, 200) selon la revendication 1, comportant en outre :

un régulateur de quadrature (150) conçu pour recevoir le signal en quadrature ($Q_1$) et un signal de réinjection ($Q_2$) qui est réinjecté dans le capteur (100, 200) pour réguler le signal en quadrature ($Q_1$) à une valeur sensiblement nulle ;
dans lequel le circuit d'évaluation (170) est conçu pour décider si ledit signal de réinjection ($Q_2$) est soumis à une oscillation périodique.

**3.** Capteur (100, 200) selon la revendication 2, dans lequel le signal d'état ($X_{st}$) est en outre acheminé au régulateur de quadrature (150) et dans lequel le régulateur de quadrature (150) est conçu pour fixer le signal de réinjection ($Q_2$) à sa valeur instantanée lorsque le signal d'état ($X_{st}$) effectue un saut à une valeur qui indique que le signal de vitesse effectif ($R_1$) est influencé par une perturbation externe agissant sur le capteur (100, 200).

**4.** Capteur (100, 200) selon l'une quelconque des revendications précédentes, comportant en outre :

un circuit de correction (180) auquel sont fournis le signal d'état ($X_{st}$) et le signal de vitesse ($R_1$), et conçu pour soumettre le signal de vitesse ($R_1$) à une correction dans le cas où le signal d'état ($X_{st}$) présente une valeur qui indique que le signal de vitesse effectif ($R_1$) est influencé par une perturbation externe agissant sur le capteur.

**5.** Capteur (100, 200) selon la revendication 4, dans lequel le circuit de correction (180) comprend ce qui suit :

- un déphaseur (182) conçu pour délivrer le signal en quadrature ($Q_1$) à déphaser de 90° et un signal en quadrature ($Q_1$) déphasé de 90° ;
- un soustracteur (184) conçu pour calculer la différence entre le signal en quadrature déphasé ($Q_1$) et le signal de vitesse ($R_1$) et pour le délivrer en tant que signal de différence (Qdif) ;
- un multiplexeur (186) conçu pour délivrer soit le signal de vitesse ($R_1$) soit le signal de différence calculé par le soustracteur (184) en fonction du signal d'état ($X_{st}$).

6. Capteur (100, 200) selon l'une quelconque des revendications précédentes, dans lequel le capteur (100, 200) est réalisé sous la forme d'un capteur de vitesse de rotation et comporte un corps oscillant qui peut être mis en oscillation à une fréquence d'entraînement ($f_x$) par rapport à un substrat.

7. Procédé de mise en fonctionnement d'un capteur (100, 200), comportant les étapes consistant à :

- générer un signal de capteur (S) qui oscille à une fréquence d'entraînement ($f_x$) ;
- démoduler le signal de capteur (S) par multiplication par un premier signal de démodulation afin de générer à partir du signal de capteur (S) un signal de vitesse ($R_1$) dans lequel est contenue une information concernant la grandeur de mesure à mesurer ;
- démoduler le signal de capteur (S) par multiplication par un deuxième signal de démodulation décalé de 90° par rapport au premier signal de démodulation afin de générer à partir du signal de capteur (S) un signal en quadrature ($Q_1$) ;

**caractérisé par** les étapes consistant à :

- décider si le signal en quadrature ($Q_1$) ou un signal ($Q_2$) dérivé de celui-ci est soumis à une oscillation périodique ; et
- lors de la présence d'une telle oscillation périodique, délivrer un signal d'état ($X_{st}$) ayant une valeur qui indique que le signal de vitesse effectif ($R_1$) est influencé par une perturbation externe agissant sur le capteur (100, 200).

8. Procédé selon la revendication 7, dans lequel le signal de vitesse ($R_1$) est soumis à une correction dans le cas où le signal d'état ($X_{st}$) présente une valeur qui indique que le signal de vitesse effectif ($R_1$) est influencé par une perturbation externe agissant sur le capteur.

9. Procédé selon la revendication 8, dans lequel les étapes suivantes sont en outre prévue :

déphaser le signal en quadrature de 90° et générer un signal en quadrature déphasé de 90° ;
générer un signal de différence en calculant la différence entre le signal en quadrature déphasé et le signal de vitesse ($R_1$) ; et
délivrer le signal de vitesse ($R_1$) ou le signal de différence calculé par le soustracteur en fonction du signal d'état ($X_{st}$).

10. Procédé selon l'une quelconque des revendications 7 à 9, dans lequel le capteur est réalisé sous la forme d'un capteur de vitesse de rotation et comporte un corps oscillant qui peut être mis en oscillation à une fréquence d'entraînement ($f_x$) par rapport à un substrat.

Fig. 1

EP 2 435 787 B1

EP 2 435 787 B1

112a 112b

118

114

116

110

**Fig. 2**

**Fig. 3a**

Fig. 3b

Fig. 4a

$R_1$, $Q_1$ [Bits]

t [s]

$R_1$

$Q_1$

200
150
100
50
0
-50

0   0.05   0.1   0.15   0.2   0.25   0.3   0.35

Fig. 4b

Fig. 5

Fig. 6

**Fig. 7a**

EP 2 435 787 B1

Fig. 7b

Fig. 8

**IN DER BESCHREIBUNG AUFGEFÜHRTE DOKUMENTE**

**In der Beschreibung aufgeführte Patentdokumente**

- US 5764705 A